# EUROPÄISCHE PATENTSCHRIFT

(11) **EP 3 483 011 B1**
(45) Veröffentlichungstag und Bekanntmachung des Hinweises auf die Patenterteilung: **16.09.2020**
(21) Anmeldenummer: 18195612.9
(22) Anmeldetag: 09.10.2015
(51) Int. Cl.: B60R 21/203, B60R 21/217

(54) **VORRICHTUNG ZUR SCHWINGFÄHIGEN BEFESTIGUNG EINES GASGENERATORS ALS SCHWINGUNGSDÄMPFERMASSE INNERHALB EINES AIRBAGMODULS**
DEVICE FOR FIXING OSCILLATABLE A GAS GENERATOR AS A VIBRATION DAMPER MASS WITHIN AN AIRBAG MODULE
DISPOSITIF DE FIXATION OSCILLER UN GÉNÉRATEUR DE GAZ COMME UNE MASSE D'AMORTISSEUR DE VIBRATIONS DANS UN MODULE D'AIRBAG

(30) Priorität: 23.10.2014 DE 202014008432 U
(43) Veröffentlichungstag der Anmeldung: 15.05.2019
(62) Teilanmeldung aus: 15788323.2
(73) Patentinhaber: ZF Automotive Safety Germany GmbH, 63743 Aschaffenburg (DE)
(72) Erfinder: Von Roden, Constantin, 63791 Karlstein (DE); Eck, Gregor, 63931 Kirchzell (DE); Oechel, Holger, 63454 Hanau (DE)
(74) Vertreter: ZF Patentabteilung - DIPS

(56) Entgegenhaltungen:
- EP-A1- 1 238 869
- DE-A1-102007 049 234
- DE-A1-102009 030 601
- DE-C1- 10 215 330
- DE-U1- 20 105 434
- DE-U1-202006 016 948

## Beschreibung

Die Erfindung betrifft eine Vorrichtung zur schwingfähigen Befestigung eines Gasgenerators als Schwingungsdämpfermasse innerhalb eines Airbagmoduls, ein Airbagmodul, ein Fahrzeuginsassen-Sicherungssystem, ein Verfahren zur Herstellung einer Vorrichtung zur schwingfähigen Befestigung eines Gasgenerators als Schwingungsdämpfermasse innerhalb eines Airbagmoduls sowie ein Verfahren zur Herstellung eines Airbagmoduls.

Es sind Vorrichtungen zur schwingfähigen Befestigung eines Gasgenerators als Schwingungsdämpfermasse innerhalb eines Airbagmoduls bekannt, bei denen ein Befestigungsring, der zugleich als Schwingungstilger dient, vorgesehen ist. Üblicherweise bestehen derartige Befestigungsringe aus einem Metallring, der in Silikon eingespritzt ist und am Generatorflansch vercrimpt wird. Eine derartige Lösung ist beispielsweise aus DE 10 2009 030 601 A1 bekannt. Konkret wird in der DE 10 2009 030 601 A1 eine ringförmige Verstärkungseinlage ("Halteteil") beschrieben, das axial abstehende Fortsätze in Form von abgewinkelten Zungen aufweist, die in eine Anschlaglippe eingebettet sind. Die Anschlaglippe besteht aus mehreren, entlang des Umfangs des Halteteils angeordneten Kreissegmenten aus Silikon. Weiterhin sind an dem Halteteil Befestigungsfüße angespritzt, die aus einem elastischen Material bestehen und an einem Generatorträger befestigt sind. Alternativ wird in der DE 10 2009 030 601 A1 auch vorgeschlagen, dass die Anschlaglippe einstückig in den jeweiligen Befestigungsfuß übergeht und so einstückig umfangsmäßig geschlossen umläuft (also ebenfalls einen Ring ausbildet, in dem das Halteteil aufgenommen ist).

Problematisch ist hierbei, dass zur sicheren Haftung des elastischen Materials (insbesondere Silikons) am Metallring, dieser aufwendig gesäubert und bis zum Umspritzen sauber gehalten werden muss. Dies ist mit entsprechend hohen Kosten verbunden. Weiterhin wird der Aufwand zur Herstellung des Befestigungsrings sowie zur Montage eines entsprechenden Airbagmoduls mit einem derartigen Befestigungsring als verbesserungswürdig angesehen.

Aus der DE 201 05 434 U1 ist im Übrigen ein Gassackmodul aus mehreren Komponenten bekannt, die wenigstens ein Trägerelement, einen Gasgenerator und einen Gassack umfassen, wobei wenigstens eine der Komponenten mittels wenigstens einem elastischen, aus Silikon bestehenden Element schwingungsentkoppelt im Gassackmodul gelagert ist.

Die Aufgabe der vorliegenden Erfindung ist es, eine Vorrichtung zur schwingfähigen Befestigung eines Gasgenerators als Schwingungsdämpfermasse innerhalb eines Airbagmoduls vorzuschlagen, welche die oben genannten Nachteile überwindet. Insbesondere soll eine Vorrichtung zur schwingfähigen Befestigung eines Gasgenerators als Schwingungsdämpfermasse vorgeschlagen werden, die einfach und kostengünstig herstellbar ist. Weiterhin soll ein Airbagmodul vorgeschlagen werden, dass mit vergleichsweise geringem Aufwand kostengünstig hergestellt und montiert werden kann. Weiterhin soll ein entsprechendes Fahrzeuginsassen-Sicherungssystem vorgeschlagen werden. Zuletzt sollen ein Verfahren zur Herstellung einer Vorrichtung zur schwingfähigen Befestigung eines Gasgenerators als Schwingungsdämpfermasse innerhalb eines Airbagmoduls sowie ein Verfahren zur Herstellung eines Airbagmoduls vorgeschlagen werden, wobei die Herstellung einfach und mit vergleichsweise geringen Kosten ermöglicht sein soll.

Erfindungsgemäß wird diese Aufgabe im Hinblick auf die Vorrichtung zur schwingfähigen Befestigung durch den Gegenstand des Anspruchs 1, im Hinblick auf das Airbagmodul durch den Gegenstand gemäß Anspruch 9, im Hinblick auf das Fahrzeuginsassen-Sicherungssystem durch den Gegenstand gemäß Anspruch 12, im Hinblick auf das Verfahren zur Herstellung einer Vorrichtung zur schwingfähigen Befestigung eines Gasgenerators durch die Gegenstände gemäß Anspruch 13 sowie im Hinblick auf das Verfahren zur Herstellung eines Airbagmoduls durch den Gegenstand gemäß Anspruch 15 gelöst.

Erfindungsgemäß wird die obige Aufgabe durch eine Vorrichtung zur schwingfähigen Befestigung eines Gasgenerators als Schwingungsdämpfermasse innerhalb eines Airbagmoduls gelöst, wobei ein Befestigungsring zur Befestigung des Gasgenerators vorgesehen ist, wobei der Befestigungsring mindestens einen elastischen Abschnitt und eine Verstärkungseinlage zur Verstärkung des Befestigungsrings und Fixierung des Befestigungsrings am Gasgenerator aufweist, wobei die Verstärkungseinlage durch einen offenen Verstärkungsring gebildet wird und der elastische Abschnitt durch einen geschlossenen Ring, in dem die Verstärkungseinlage aufgenommen ist. Ein Kerngedanke liegt hierbei darin, einen offenen Verstärkungsring auszubilden, der mit einem elastischen, geschlossenen Ring zusammenwirkt. Dadurch wird auf vorteilhafte Art und Weise die Tatsache ausgenutzt, dass der elastische Abschnitt zur Stabilisierung des grundsätzlich offenen Verstärkungsrings genutzt werden kann. Dadurch, dass der Verstärkungsring offen ausgebildet ist, kann dieser jedoch vergleichsweise einfach auf einem Flansch des Gasgenerators montiert werden. Weitere Bauteile zur Befestigung des Befestigungsrings können entfallen. Insgesamt wird die Montage vereinfacht. Außerdem wird durch das Zusammenwirken von elastischem Abschnitt und offenem Verstärkungsring auch eine Haftung zwischen diesen beiden Elementen verbessert, so dass eine aufwendige Reinigung des Verstärkungsrings, wenn dieser aus Metall ausgebildet ist, entfallen kann oder zumindest mit geringerem Aufwand durchgeführt werden kann.

Vorzugsweise ist die Verstärkungseinlage zumindest teilweise aus Kunststoff ausgebildet. In einer Ausführungsform wird eine Verstärkungseinlage mit einem Metallkern bereitgestellt, der (zumindest abschnittsweise) mit Kunststoff beschichtet, insbesondere umspritzt ist. In einer weiteren Ausführungsform wird eine Verstärkungseinlage vorgeschlagen, die vollständig aus (ggfs. faserverstärktem) Kunststoff ausgebildet ist. Insbesondere ist jedoch eine Oberfläche der Verstärkungseinlage zumindest teilweise aus Kunststoff ausgebildet. Dadurch kann eine aufwendige Reinigung der Oberfläche des Metallteils entfallen, da der elastische Abschnitt vergleichsweise gut an der Kunststoffoberfläche haftet. Insbesondere ist die gesamte Oberfläche der Verstärkungseinlage oder zumindest die gesamte Oberfläche der Verstärkungseinlage, die in (unmittelbaren) Kontakt mit dem elastischen Abschnitt ist, aus Kunststoff ausgebildet. Zur Fixierung des Befestigungsrings am Gasgenerator kann dieser (ggf. integral angeformte) Befestigungseinrichtungen, wie beispielsweise plastisch verformbare Abschnitte (zur Realisierung beispielsweise einer Crimpverbindung) oder Rasteinrichtungen zur Realisierung einer Rastverbindung bzw. Schnappverbindung aufweisen.

Unter "Kunststoff" sollen insbesondere polymere Materialien verstanden werden, wie beispielsweise Polyolefin, vorzugsweise Polyethylen und/oder Polypropylen und/oder Polyamid und/oder Polyvinylchlorid und/oder Polystyrol und/oder Polyurethan und/oder Polyethylenterephthalat. Die erwähnten Kunststoffe können faserverstärkt sein, beispielsweise durch Kohlefaser und/oder Glasfaser. Ein E-Modul des Kunststoffs ist vorzugsweise mindestens 2 GPa vorzugsweise mindestens 5 GPa, weiter vorzugsweise mindestens 10 GPa, noch weiter vorzugsweise mindestens 50 GPa. Ein elastischer Abschnitt besteht vorzugsweise aus einem Material, dessen E-Modul kleiner als 1 GPa, vorzugsweise kleiner 0,5 GPa, weiter vorzugsweise kleiner 0,1 GPa ist. Sollte der elastische Abschnitt aus mehreren Materialien gefertigt sein, ist es bevorzugt, dass das Material mit dem höchsten E-Modul unterhalb der eben genannten Werte liegt. Beispielsweise kann der elastische Abschnitt aus einem Elastomer, insbesondere Silikon und/oder Kautschuk, gebildet sein oder derartige Materialien umfassen.

Gemäß einer weiteren Vorrichtungsvariante weist der Befestigungsring mindestens einen elastischen Abschnitt und ein Verstärkungsteil zur Verstärkung des Befestigungsrings und Fixierung des Befestigungsrings am Gasgenerator auf, wobei das Verstärkungsteil zumindest abschnittsweise den elastischen Abschnitt umgreift derart, dass der elastische Abschnitt an dem Gasgenerator gehalten werden kann. Ein Kerngedanke liegt hierbei darin, ein Verstärkungsteil vorzusehen, dass nicht nur zur Verstärkung des Befestigungsrings sowie ggfs. zur Befestigung an einem Flansch des Gasgenerators dient, sondern gleichzeitig auch so angeordnet ist, dass der elastische Abschnitt an dem Gasgenerator (bzw. zwischen Verstärkungsteil und Gasgenerator) gehalten wird. Das Verstärkungsteil kann aus Metall oder Kunststoff ausgebildet sein (oder derartige Materialien umfassen). In jedem Fall wird eine verbesserte Halterung des elastischen Abschnitts erreicht, so dass eine Reinigung des Verstärkungsteils entfallen kann oder zumindest mit geringerem Aufwand verbunden ist. Das Verstärkungsteil kann als separates Bauteil vorgesehen werden, das mit dem elastischen Abschnitt und dem Gasgenerator zusammengefügt wird derart, dass der elastische Abschnitt zwischen Verstärkungsteil und Gasgenerator gehalten wird. Das Verstärkungsteil kann (nach dem Einlegen des Gasgenerators) beispielsweise über den elastischen Abschnitt und den Flansch des Gasgenerators umgelegt werden, um den Gasgenerator sowie den elastischen Abschnitt sicher zu halten. Optional kann das Verstärkungsteil mit Kunststoff beschichtet, insbesondere umspritzt sein (und/oder einen Metallkern aufweisen). Weiterhin kann das Verstärkungsteil als offener Ring ausgebildet sein, der ggfs. so ausgebildet ist, dass er um den Flansch des Gasgenerators (insbesondere mit bereits angeordneten elastischem Abschnitt) gelegt wird, so dass unter Umständen auf ein Vercrimpen von Metallabschnitten verzichtet werden kann (zumindest, wenn entsprechende Haltevorsprünge am Verstärkungsteil vorgesehen sind). Die Verbindung von offenen Ringenden kann durch Verkleben oder durch Verrasten oder ein Zusatzbauteil erfolgen (wie beispielsweise einen Niet oder eine Schraube).

Der oben erwähnte Verstärkungsring kann aus Metall und/oder Kunststoff gefertigt sein.

Die Verstärkungseinlage und/oder das Verstärkungsteil und/oder der Verstärkungsring können einen Metallkern aufweisen, der zumindest abschnittsweise mit Kunststoff beschichtet, insbesondere umspritzt ist. Verstärkungseinlage und/ oder Verstärkungsteil und/oder Verstärkungsring können aus Metall und/oder Kunststoff, insbesondere faserverstärktem Kunststoff gefertigt sein.

Die Verstärkungseinlage und/oder das Verstärkungsteil und/oder der Verstärkungsring können mindestens einen Befestigungsabschnitt aufweisen, der zur Befestigung des Befestigungsrings am Gasgenerator, insbesondere an einem Flansch des Gasgenerators, plastisch verformbar ist. Bei dem Befestigungsabschnitt kann es sich um einen (ggfs. ringförmigen bzw. umlaufenden) Rand des jeweiligen Bauteils handeln. Vorzugsweise ist der Befestigungsabschnitt als Befestigungslasche ausgebildet, die (insbesondere zur Herstellung einer Crimpverbindung) gebogen werden kann. Beispielsweise kann eine derartige Befestigungslasche um einen Flansch des Gasgenerators gelegt werden und/oder durch einen Schlitz des Flansches des Gasgenerators geführt werden. Nach einem Einlegen des Gasgenerators können einzelne Abschnitte des jeweiligen Bauteils über den Generatorflansch umgelegt werden, um diesen sicher zu halten. Mit einem derartigen Befestigungsabschnitt kann eine einfache Befestigung bzw. Montage des Gasgenerators realisiert werden.

In einer konkreten Ausführungsform ist eine (zusätzliche) Ringscheibe (insbesondere aus Metall und/oder Kunststoff, ggfs. mit Kunststoff beschichtet, vorzugsweise umspritzt) vorgesehen, die auf den Generatorflansch gelegt werden kann. Die Ringscheibe kann insbesondere (ggf. zusammen mit dem Flansch des Gasgenerators) durch das Umlegen von Befestigungsabschnitten der (ggfs. mit Kunststoff umspritzten) Verstärkungseinlage befestigt werden. Grundsätzlich kann die Ringscheibe als Zusatzgewicht fungieren. Dadurch wird mit einfachen Maßnahmen die Schwingungsdämpfermasse erhöht, wobei auf synergistische Weise die Befestigung des Gasgenerators am Befestigungsring genutzt wird, um gleichzeitig auch das Zusatzgewicht zu befestigen. Insgesamt wird bei einfacher Montage die Effektivität der Vorrichtung erhöht. Die Ringscheibe kann ein Gewicht von mindestens 100 g aufweisen.

Die Verstärkungseinlage und/oder das Verstärkungsteil und/oder der Verstärkungsring können eine Rasteinrichtung zur rastenden Befestigung des Befestigungsrings am Gasgenerator, insbesondere an einem Flansch des Gasgenerators, aufweisen. Der Befestigungsring kann beispielsweise auf den Flansch des Gasgenerators aufgeclipst werden und optional lösbar (oder unlösbar) mit diesem befestigt werden. Konkret kann die Rasteinrichtung mindestens eine Rastzunge aufweisen, die einen Vorsprung aufweist, der an dem Flansch des Gasgenerators vorbeigeführt werden kann, so dass ein Rand des Flansches hinter dem Vorsprung einrastet. Besonders bevorzugt bei dieser Alternative ist eine Ausführung des Verstärkungsteils und/oder der Verstärkungseinlage und/oder des Verstärkungsrings (ggfs. vollständig) aus faserverstärktem Kunststoff.

Der Befestigungsring kann lösbar, vorzugsweise über eine Schraubverbindung, oder unlösbar, vorzugsweise über eine Nietverbindung, an dem Gasgenerator, insbesondere an einem Flansch des Gasgenerators, befestigt werden.

Das Verstärkungsteil kann (zumindest teilweise) durch einen offenen Ring gebildet werden, der zur Fixierung des Befestigungsrings an dem Gasgenerator, insbesondere an einem Flansch des Gasgenerators, gelegt werden kann. Der (offene) Ring weist vorzugsweise mindestens einen Haltevorsprung auf, der über den Flansch des Gasgenerators gelegt werden kann. Vorzugsweise ist das Verstärkungsteil als separates Bauteil ausgebildet, das um den Flansch des Gasgenerators (mit bereits an diesem angeordneten elastischen Abschnitt) gelegt werden kann, so dass ggfs. auf ein Vercrimpen von Befestigungsabschnitten verzichtet werden kann. Enden des offenen Rings können (nach einer Anordnung des Rings an dem Gasgenerator, insbesondere dem Flansch des Gasgenerators) vorzugsweise schließbar sein, insbesondere durch eine stoffschlüssige und/oder kraftschlüssige und/oder formschlüssige Verbindung. Beispielsweise kann eine Rastverbindung und/oder Verklebung und/oder eine Verschweißung und/oder eine Schraubverbindung und/oder eine Nietverbindung vorgesehen sein. Verbindungselemente können integraler Bestandteil des (offenen) Ringes sein oder als separate Elemente bereitgestellt werden. Besonders bevorzugt ist ein solches Verstärkungsteil aus Kunststoff gefertigt. Insgesamt wird eine einfache Montage des Befestigungsrings ermöglicht, die ohne eine plastische Umformung ermöglicht wird, insbesondere keine Metallteile benötigt.

Wenn die Verstärkungseinlage durch einen (offenen) Verstärkungsring gebildet wird, wird dieser vorzugsweise durch den elastischen Abschnitt zusammengehalten. Insbesondere wird der elastische Abschnitt durch eine Rückstellkraft des (offenen) Verstärkungsrings gespannt, insbesondere derart, dass eine Haltekraft (Kraftreibungskraft) zwischen offenem Verstärkungsring und elastischem Abschnitt erhöht wird. Dadurch kann auf einfache Art und Weise eine verbesserte Halterung des elastischen Abschnitts an der Verstärkungseinlage erreicht werden. Insgesamt wird der Montage- bzw. Herstellungsaufwand reduziert.

Die Verstärkungseinlage und/oder das Verstärkungsteil und/oder der Verstärkungsring und/oder die Ringscheibe können aus einem Material gebildet sein, dass ein E-Modul von mindestens 5 GPa, vorzugsweise mindestens 10 GPa, weiter vorzugsweise mindestens 100 GPa aufweist.

Der elastische Abschnitt kann aus einem Elastomer, insbesondere einem Gummimaterial (Kautschuk) oder Silikon gebildet werden. Ein E-Modul des Materials des elastischen Abschnitts kann unter 1 GPa, vorzugsweise unter 0,5 GPa, weiter vorzugsweise unter 0,1 GPa liegen.

Es kann mindestens ein (vorzugsweise mehrere) axial verlaufende Dämpfungsglieder, insbesondere Tilgerfüße, vorgesehen sein. Der Befestigungsring kann einen radial verlaufenden Ringspalt aufweisen. Dieser Ringspalt kann beispielsweise über eine (an dem Befestigungsring angeformte) Verbindungseinrichtung, wie beispielsweise eine Clipverbindung, ggfs. umfassend einen Pin, überbrückt werden, so dass der Befestigungsring geschlossen werden kann. Ggfs. können Enden des Befestigungsrings auch dadurch (im montierten Zustand) verbunden werden, dass an den Enden vorgesehene Vorsprünge durch eine Öffnung des Gasgenerators, insbesondere des Flansches des Gasgenerators, geführt werden und durch diese Öffnung aneinandergehalten werden.

Die obige Aufgabe wird weiter gelöst durch ein Airbagmodul mit einem Gasgenerator, insbesondere umfassend einen Flansch, sowie mit einer Vorrichtung zur schwingungsfähigen Befestigung eines Gasgenerators als Schwingungsdämpfermasse innerhalb des Airbagmoduls. Die Vorrichtung zur schwingfähigen Befestigung ist, wie oben beschrieben, ausgebildet. Das Airbagmodul kann weiterhin einen Gassack und/oder einen Diffusor und/oder einen Modulträger aufweisen. Der elastische Abschnitt und/oder die Verstärkungseinlage und/oder das Verstärkungsteil können in unmittelbarem Kontakt mit dem Gasgenerator, insbesondere dem Flansch des Gasgenerators, stehen.

Der Flansch des Gasgenerators ist vorzugsweise ringförmig und kann um eine Außenwandung des Gasgenerators umlaufen. Alternativ oder zusätzlich ist der Flansch des Gasgenerators integral mit einer (der) Außenwandung des Gasgenerators ausgebildet. In einer konkreten Ausführungsform erstreckt sich der Flansch von einer Außenwandung des Gasgenerators nach außen und weist wenigstens einen gebogenen Abschnitt auf, der ggf. einen geraden Abschnitt des Flansches mit der Außenwandung verbindet.

Der elastische Abschnitt kann zwischen Verstärkungsteil und Gasgenerator, insbesondere zwischen Verstärkungsteil und dem Flansch des Gasgenerators angeordnet sein. Wenn eine Verstärkungseinlage vorgesehen ist, kann diese zwischen elastischem Abschnitt und Gasgenerator, insbesondere zwischen dem elastischen Abschnitt und dem Flansch des Gasgenerators angeordnet sein.

Der Befestigungsring und der Gasgenerator, insbesondere der Befestigungsring und der Flansch des Gasgenerators, können stoff- und/oder kraft- und/oder formschlüssig, beispielsweise über eine Crimp- und/oder Schraub- und/oder Niet- und/oder Rast- und/oder Schnappverbindung aneinander befestigt sein.

Die obige Aufgabe wird weiterhin gelöst durch ein Fahrzeuginsassen-Sicherungssystem, umfassend ein Airbagmodul der oben beschriebenen Art. Weiterhin kann ein Airbagmodul-Aufnahmegehäuse, insbesondere ein Lenkrad-gehäuse vorgesehen sein.

Die obige Aufgabe wird weiterhin gelöst durch ein Verfahren zur Herstellung einer Vorrichtung zur schwingfähigen Befestigung eines Gasgenerators als Schwingungsdämpfermasse innerhalb eines Airbagmoduls, wobei die Vorrichtung einen Befestigungsring zur Befestigung des Gasgenerators aufweist, wobei der Befestigungsring mindestens einen elastischen Abschnitt und eine Verstärkungseinlage zur Verstärkung des Befestigungsrings und Fixierung des Befestigungsrings am Gasgenerator aufweist, wobei die Verstärkungseinlage durch einen offenen Verstärkungsring und der elastische Abschnitt durch einen geschlossenen Ring gebildet wird, in dem die Verstärkungseinlage aufgenommen ist, wobei der elastische Abschnitt derart auf die Verstärkungseinlage aufgebracht wird, dass diese durch eine Spannkraft des elastischen Abschnitts zusammengehalten wird. Bei einem derartigen Verfahren wird die elastische Eigenschaft des elastischen Abschnitts auf effektive Art und Weise zur Stabilisierung und vereinfachten Montage des Befestigungsrings ausgenutzt. Dadurch werden Kosten reduziert und die Montage vereinfacht.

Gemäß einer Verfahrensvariante umfasst das Herstellungsverfahren folgende Schritte:
- Beschichten, insbesondere Umspritzen, einer Verstärkungseinlage mit Kunststoff und
- Aufbringen des elastischen Abschnittes auf den Kunststoff.

Das Verfahren wird vorzugsweise zur Herstellung einer Vorrichtung zur schwingfähigen Befestigung der oben beschriebenen Art eingesetzt bzw. zur Herstellung eines Airbagmoduls der oben beschriebenen Art. Insoweit im Zusammenhang mit der Vorrichtung zur schwingfähigen Befestigung eines Gasgenerators bzw. dem Airbagmodul weiter oben funktionale Merkmale beschrieben sind, sollen diese optional auch in verfahrensmäßiger Hinsicht das Verfahren zur Herstellung einer Vorrichtung zur schwingfähigen Befestigung weiterbilden. Dies gilt auch für die nachfolgenden Verfahrensaspekte.

Gemäß einem weiteren Verfahrensaspekt wird die obige Aufgabe gelöst durch ein Verfahren zur Herstellung eines Airbagmoduls der oben beschriebenen Art mit einem Gasgenerator, einer Vorrichtung zur schwingfähigen Befestigung eines Gasgenerators als Schwingungsdämpfermasse innerhalb eines Airbagmoduls, wobei die Vorrichtung gemäß der oben beschriebenen Art ausgebildet ist, wobei die Vorrichtung einen Befestigungsring zur Befestigung des Gasgenerators aufweist, wobei der Befestigungsring mindestens einen elastischen Abschnitt und ein Verstärkungsteil zur Verstärkung des Befestigungsrings und Fixierung des Befestigungsrings am Gasgenerator aufweist, umfassend die Schritte:
a) Anordnen des elastischen Abschnitts an dem Gasgenerator, insbesondere einem Flansch des Gasgenerators,
b) Zusammenfügen des Verstärkungsteils mit dem elastischen Abschnitt und dem Gasgenerator, und
c) Befestigen des Verstärkungsteils am Gasgenerator, insbesondere dem Flansch des Gasgenerators.

Vorzugsweise erfolgt Schritt b) nach dem Schritt a). Das Verstärkungsteil kann (zunächst) als separates Bauteil zur Verfügung gestellt werden, das mit dem elastischen Abschnitt und dem Gasgenerator zusammengefügt wird. Insgesamt kann durch derartiges Herstellungsverfahren ein sicheres Halten des Gasgenerators realisiert werden, auch wenn eine Haftung zwischen elastischem Abschnitt und Verstärkungsteil (beispielsweise aufgrund eines Verzichts einer Reinigung des Verstärkungsteils) nicht besonders hoch ist.

Die Erfindung wird im Folgenden anhand von Ausführungsbeispielen unter Bezugnahme auf die beigefügten schematischen Figuren näher erläutert. Darin zeigen:
- Figur 1 eine schematische Schrägansicht einer ersten Ausführungsform einer Vorrichtung zur schwingfähigen Befestigung eines Gasgenerators;
- Figur 2 eine schematische Schrägansicht der Vorrichtung gemäß Figur 1 zusammen mit einem Gasgenerator;
- Figur 3 eine schematische Schrägansicht einer weiteren Ausführungsform einer Vorrichtung zur schwingfähigen Befestigung eines Gasgenerators;
- Figur 4 eine schematische Schrägansicht einer weiteren Ausführungsform einer Vorrichtung zur schwingfähigen Befestigung eines Gasgenerators;
- Figur 5 einen Ausschnitt einer schematischen Schrägansicht eines Gasgenerators mit einer Vorrichtung zur schwingfähigen Befestigung des Gasgenerators;
- Figur 6 eine schematische Explosionsdarstellung einer weiteren Ausführungsform einer Vorrichtung zur schwingfähigen Befestigung eines Gasgenerators;
- Figur 7 eine schematische Schrägansicht einer weiteren Ausführungsform einer Vorrichtung zur schwingfähigen Befestigung eines Gasgenerators; und
- Figur 8 eine schematische Schrägansicht einer weiteren Ausführungsform einer Vorrichtung zur schwingfähigen Befestigung eines Gasgenerators.

In der nachfolgenden Beschreibung werden für gleiche und gleichwirkende Teile dieselben Bezugsziffern verwendet.

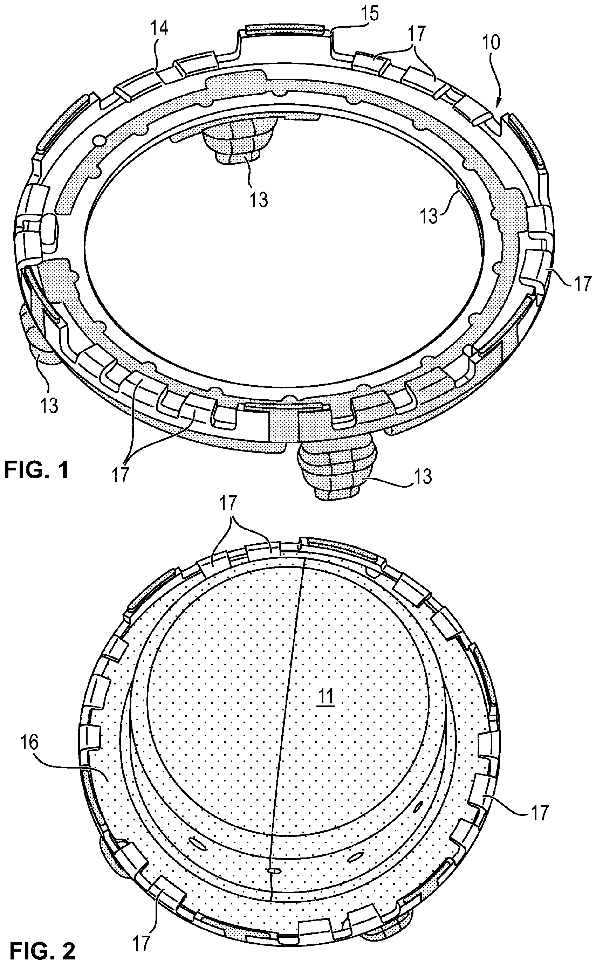

Fig. 1 zeigt eine Schrägansicht einer ersten Ausführungsform einer Vorrichtung 10 zur schwingfähigen Befestigung eines Gasgenerators 11 (siehe Fig. 2) als Schwingungsdämpfermasse innerhalb eines Airbagmoduls. Fig. 2 zeigt eine Schrägansicht des Gasgenerators 11 mit darauf montierten Gasgenerator 11. Die Vorrichtung 10 weist einen Befestigungsring 12 mit axial verlaufenden Dämpfungsgliedern (Tilgerfüßen) 13 auf. Weiterhin umfasst der Befestigungsring 12 elastische Abschnitte insbesondere aus Silikon und eine Verstärkungseinlage 15. Die Verstärkungseinlage 15 verstärkt die elastischen Abschnitte 14 und dient der Fixierung des Befestigungsrings 12 an einem Flansch 16 des Gasgenerators 11 (siehe Fig. 2).

Dazu weist die Verstärkungseinlage 15 mehrere plastisch verformbare Laschen 17 auf, die um den Flansch 16 des Gasgenerators 11 gelegt werden können, so dass der Befestigungsring 12 am Gasgenerator 11 gehalten wird.

Die Verstärkungseinlage 15 gemäß den Figuren 1 und 2 ist als Kunststoff umspritztes Metallteil ausgebildet. Im Allgemeinen reicht es jedoch aus, wenn die Vorrichtung 10 zur schwingfähigen Befestigung eines Gasgenerators 11 als Schwingungsdämpfermasse innerhalb eines Airbagmoduls, einen Befestigungsring 12 zur Befestigung des Gasgenerators 11 aufweist, der mindestens einen elastischen Abschnitt 14 sowie mindestens eine Verstärkungseinlage 15 zur Verstärkung des Befestigungsrings 12 und Fixierung des Befestigungsrings 12 am Gasgenerator aufweist, wobei eine Oberfläche der Verstärkungseinlage 15 zumindest teilweise aus Kunststoff ausgebildet ist.

Die Tilgerfüße 13 werden in einem montierten Zustand eines Airbagmoduls an einem (nicht gezeigten) Generatorträger befestigt.

Optional kann auf den Flansch 16 eine (nicht gezeigte) ringförmige Metallscheibe aufgelegt werden (die umspritzt sein kann, aber nicht muss). Die Metallscheibe kann dann zusammen mit dem Flansch des Gasgenerators durch das Umlegen der Laschen 16 befestigt werden und als Zusatzgewicht fungieren.

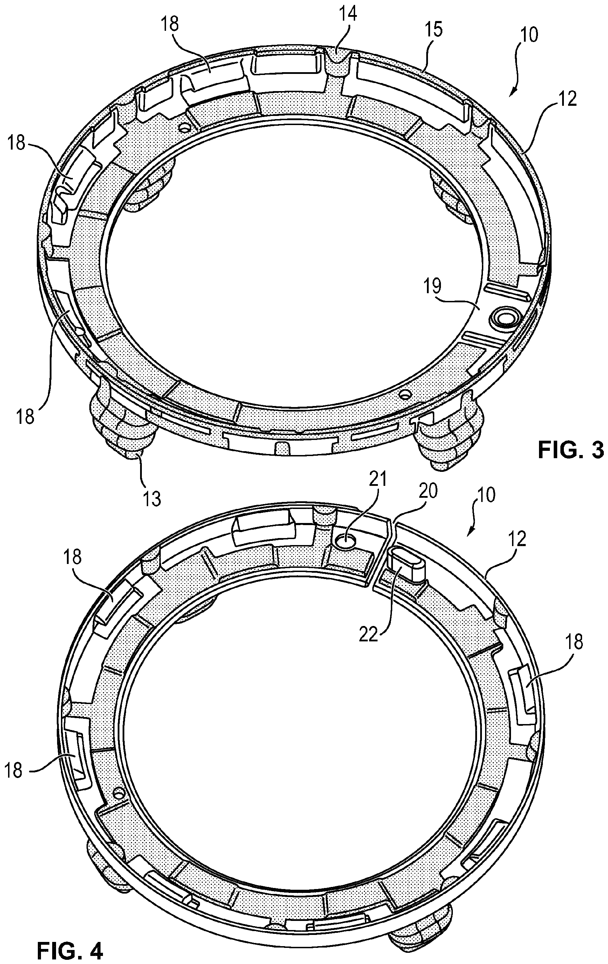

Fig. 3 zeigt eine weitere Ausführungsform der Vorrichtung 10 mit einem Befestigungsring 12. Der Befestigungsring 12 weist (analog Fig. 1) elastische Abschnitte 14 auf sowie eine Verstärkungseinlage 15. Im Unterschied zu der Ausführungsform nach Fig. 1 weist die Ausführungsform nach Fig. 3 keine Laschen, sondern Clips 18 auf, die über dem Flansch des Gasgenerators 11 (der, wie in Fig. 2 gezeigt, ausgebildet sein kann) geclipst werden können. Dadurch wird der Befestigungsring 12 an dem Flansch 16 des Gasgenerators 11 fixiert. Die Verstärkungseinlage 15 ist (analog zu Fig. 1) aus einem kunststoff-umspritzten Metallteil gebildet, kann jedoch auch gänzlich aus (ggfs. faserverstärktem) Kunststoff ausgebildet werden. Optional kann der Befestigungsring 12 gemäß Fig. 3 weiterhin durch eine Schraubverbindung an dem Flansch 16 des Gasgenerators 11 gesichert werden. Dazu ist eine Schraubenaufnahme 19 vorgesehen. Alternativ kann die Ausführungsform nach Fig. 3 auch so angepasst werden, dass (ebenfalls optional) eine zusätzliche Nietverbindung zwischen Flansch 16 und Befestigungsring 12 bereitgestellt ist.

Fig. 4 zeigt eine Vorrichtung 10 mit einem Befestigungsring 12, der (analog zu Fig. 3) Clips 18 aufweist, die (wie im Zusammenhang mit Fig. 3 beschrieben) an dem Flansch 16 des Gasgenerators 11 (der gemäß Fig. 2 ausgebildet sein kann) einrasten. Im Unterschied zu den Figuren 3 und 1 (die spaltlose Ausführungsformen des Befestigungsrings 12 zeigen) hat der Befestigungsring 12 gemäß Fig. 4 einen Spalt 20, der bei der Montage (etwas) geöffnet werden kann, so dass der Befestigungsring 12 mit geringerem Aufwand auf den Flansch 16 aufgeclipst werden kann. Gegebenenfalls wäre es auch vorstellbar, dass die Clips 18 lediglich als (starre) Vorsprünge vorgesehen sind, wobei eine Montage zwischen Befestigungsring 12 und Flansch 16 dadurch erfolgt, dass der Spalt 20 weit genug geöffnet wird. Bei einer derartigen Alternative wären die Vorsprünge 18 lediglich Sicherungsvorsprünge, die verhindern, dass sich der Befestigungsring 12 vom Flansch 16 lösen kann. Weiterhin ist die Ausführungsform gemäß Fig. 4 für eine (unlösbare) Nietverbindung ausgelegt und weist dazu eine Öffnung 21 auf. Über die Öffnung 21 kann der Befestigungsring 12 mit dem Flansch 16 verbunden werden. Weiterhin ist ein Positioniernippel 22 vorgesehen, der durch eine Öffnung des Flansches 16 des Gasgenerators 11 geführt werden kann. Durch Zusammenwirken zwischen einer Nietverbindung und dem in der Öffnung aufgenommenen Positioniernippel 22 kann der geschlitzte Befestigungsring 12 nach der Montage stabilisiert werden, so dass sich der Spalt nicht mehr öffnen kann.

In Fig. 4 kann die Nietverbindung auch durch eine Schraubverbindung ersetzt werden. In einer einfacheren Ausgestaltung könnte die Nietverbindung auch weggelassen werden. Beispielsweise wäre es auch vorstellbar, dass sich der Positioniernippel 22 derart unterteilt, dass eine erste Hälfte auf der einen Schlitzseite und eine zweite Hälfte auf der anderen Schlitzseite angeordnet ist, so dass der Gesamt-Positioniernippel durch eine Öffnung innerhalb des Flansches 16 des Gasgenerators zusammengehalten werden könnte, was wiederum verhindern würde, dass sich der Spalt nach der Montage wieder öffnen würde.

Wie in Fig. 3 ist in Fig. 4 der Metalleinleger aus umspritzten Metall ausgebildet und die elastischen Abschnitte aus Silikon. Die umspritzte Verstärkungseinlage könnte jedoch auch gänzlich aus (ggfs. faserverstärktem) Kunststoff ausgebildet sein.

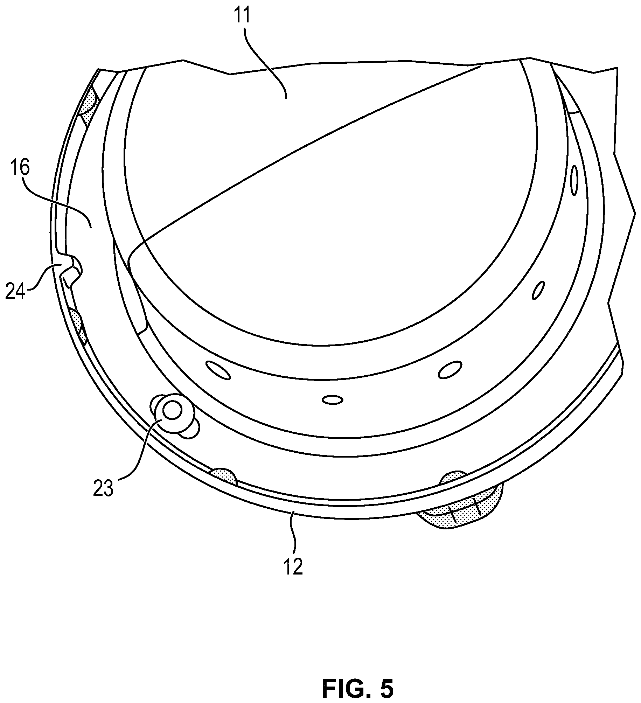

Fig. 5 zeigt einen Ausschnitt einer weiteren Ausführungsform einer Verbindungsstruktur zwischen Gasgenerator 11 bzw. dessen Flansch 16 und dem Befestigungsring 12. Insbesondere ist eine Schraubverbindung 23 vorgesehen, die den Flansch 16 am Befestigungsring 12 bzw. dessen Verstärkungseinlage fixiert. Weiterhin ist der Befestigungsring noch durch mindestens einen Fixiervorsprung 24 gesichert.

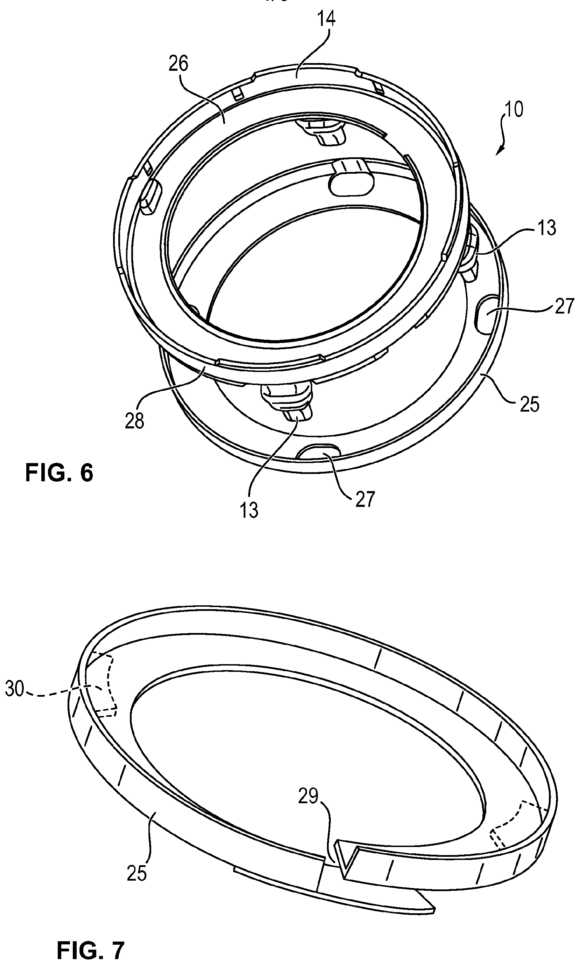

Fig. 6 zeigt eine Explosionsdarstellung einer weiteren Ausführungsform der Vorrichtung 10. Die elastischen Abschnitte 14 werden hier durch ein ringförmiges elastisches Element 26 (auch die elastischen Abschnitte 14 der übrigen Ausführungsformen können durch ein elastisches ringförmiges Element 26 gebildet werden) mit Tilgerfüßen 13 gebildet. Weiterhin ist ein Verstärkungsteil 25 (das ebenfalls ringförmig ausgebildet ist) vorgesehen, das Öffnungen 27 zur Aufnahme der Tilgerfüße 13 aufweist. Zur Montage der Vorrichtung 10 an dem Gasgenerator wird das elastische Element 26 an dem Flansch des Gasgenerators angeordnet. Daraufhin wird das Verstärkungsteil 25 mit dem elastischen Element 26 zusammengefügt, so dass das Verstärkungsteil 25 eine Umfangsfläche 28 des elastischen Elements 26 umgreift. Dabei sind die Tilgerfüße 13 in den Öffnungen 27 aufgenommen. Nach dem Anfügen des Verstärkungsteils 25 können (einzelne) Abschnitte des Verstärkungsteils 25 über das elastische Element 26 und den Flansch des Gasgenerators umgelegt werden, so dass der Gasgenerator sicher gehalten wird. In der Ausführungsform gemäß Fig. 6 handelt es sich bei dem Verstärkungsteil 25 vorzugsweise um ein Verstärkungsteil aus Metall, insbesondere mit Kunststoff umspritzt.

Fig. 7 zeigt eine schematische Schrägansicht einer weiteren Ausführungsform des Verstärkungsteils 25. Grundsätzlich kann das Verstärkungsteil 25 gemäß Fig. 7 (mit den folgenden Unterschieden) wie das Verstärkungsteil 25 gemäß Fig. 6 ausgebildet sein (beispielsweise Öffnungen 27 aufweisen). Im Unterschied zu der Ausführungsform gemäß Fig. 6, bei der das Verstärkungsteil 25 ununterbrochen ausgeführt ist, weist die Ausführungsform gemäß Fig. 7 einen Spalt 29 auf bzw. ist als offener Ring ausgebildet. Dieser offene Ring kann um den Flansch des Gasgenerators (mit bereits daran angeordnetem elastischen Element) gelegt werden, wobei ein Umlegen von Abschnitten zur Fixierung (insbesondere ein Vercrimpen) nicht notwendig ist. Eine Halterung kann durch Haltevorsprünge 30 realisiert werden, von denen einer exemplarisch (gestrichelt gezeichnet) in Fig. 7 erkennbar ist. In der Ausführungsform gemäß Fig. 7 kann es sich bei dem Verstärkungsteil 25 um ein Verstärkungsteil aus Metall oder auch Kunststoff handeln. Offene Ringenden können durch Verkleben oder durch Verrasten oder auch ein Zusatzbauteil erfolgen (wie beispielsweise eine Schraube oder ein Niet).

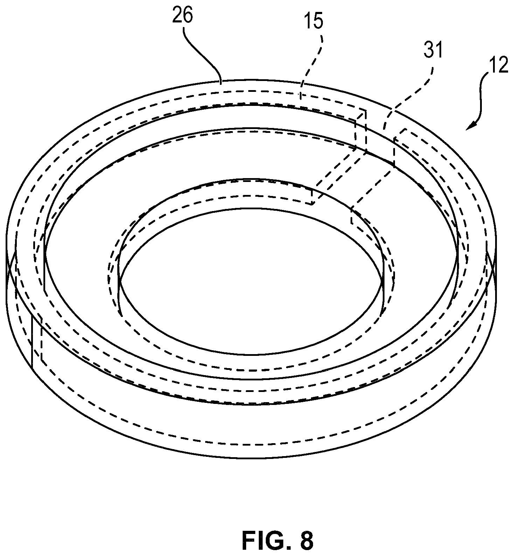

Fig. 8 zeigt eine schematische Schrägansicht einer weiteren Ausführungsform des Befestigungsrings 12 (weitere Komponenten, wie insbesondere Tilgerfüße, können vorgesehen sein). Bei der Ausführungsform gemäß Fig. 8 ist ein ringförmiges, ununterbrochenes elastisches Element 26 vorgesehen, in dem eine ringförmige Verstärkungseinlage 15 angeordnet ist. Die ringförmige Verstärkungseinlage 15 ist jedoch offen ausgebildet. Das Verstärkungsteil 15 kann aus Metall oder Kunststoff ausgebildet sein. Die Befestigung am Flansch des Gasgenerators kann, wie bei den übrigen Ausführungsformen beschrieben, erfolgen (beispielsweise können dazu, nicht gezeigte, Laschen oder Clips vorgesehen sein).

Bei der Montage kann ein Spalt 31 der Verstärkungseinlage 15 weiter geöffnet werden, wobei sich das elastische Element 26 aufgrund seiner Elastizität dehnt. Ein Flansch des Gasgenerators kann dann von (nicht im Detail dargestellten) Halteelementen der Verstärkungseinlage 15 aufgenommen werden. Sobald die Verstärkungseinlage 15 und der Flansch aneinander fixiert sind, zieht das elastische Element 26 die Verstärkungseinlage 15 zusammen, so dass diese stabilisiert wird und der Gasgenerator sicher gehalten werden kann.

### Bezugszeichenliste

- 10: Vorrichtung
- 11: Gasgenerator
- 12: Befestigungsring
- 13: Dämpfungsglied (Tilgerfuß)
- 14: elastischer Abschnitt
- 15: Verstärkungseinlage
- 16: Flansch
- 17: Lasche
- 18: Clip
- 19: Schraubenaufnahme
- 20: Spalt
- 21: Öffnung
- 22: Positioniernippel
- 23: Schraubverbindung
- 24: Fixiervorsprung
- 25: Verstärkungsteil
- 26: elastisches Element
- 27: Öffnung
- 28: Umfangsfläche
- 29: Spalt
- 30: Haltevorsprung
- 31: Spalt

## Patentansprüche

1. Vorrichtung (10) zur schwingfähigen Befestigung eines Gasgenerators (11) als Schwingungsdämpfermasse innerhalb eines Airbagmoduls,
wobei ein Befestigungsring (12) zur Befestigung des Gasgenerators (11) vorgesehen ist, der mindestens einen elastischen Abschnitt (14) sowie eine Verstärkungseinlage (15) zur Verstärkung des Befestigungsrings (12) und Fixierung des Befestigungsrings (12) am Gasgenerator (11) aufweist,
wobei die Verstärkungseinlage (15) durch einen in Ringumfangsrichtung offenen Verstärkungsring (15) gebildet wird und
wobei der elastische Abschnitt (14) durch einen geschlossenen Ring (26) gebildet wird, in dem die Verstärkungseinlage (15) aufgenommen ist.

2. Vorrichtung (10) nach Anspruch 1, **dadurch gekennzeichnet, dass** eine Oberfläche der Verstärkungseinlage (15) zumindest teilweise aus Kunststoff ausgebildet ist.

3. Vorrichtung (10) nach Anspruch 1 oder 2, **dadurch gekennzeichnet, dass** der Befestigungsring (12) mindestens einen elastischen Abschnitt (14) und ein Verstärkungsteil (25) zur Verstärkung des Befestigungsrings (12) und Fixierung des Befestigungsrings (12) am Gasgenerator (11) aufweist, wobei das Verstärkungsteil (25) zumindest abschnittsweise den elastischen Abschnitt (14) umgreift derart, dass der elastische Abschnitt (14) an dem Gasgenerator (11) fixierbar ist.

4. Vorrichtung (10) nach einem der vorangehenden Ansprüche, **dadurch gekennzeichnet, dass** die Verstärkungseinlage (15) und/oder das Verstärkungsteil (25) einen Metallkern aufweist, der zumindest abschnittsweise mit Kunststoff beschichtet, insbesondere umspritzt, ist und/oder, dass die Verstärkungseinlage und/oder das Verstärkungsteil (25) zumindest teilweise aus Metall und/oder Kunststoff, insbesondere faserverstärktem Kunststoff, gefertigt ist und/oder, dass die Verstärkungseinlage (15) und/oder das Verstärkungsteil (25) mindestens einen Befestigungsabschnitt, insbesondere eine Befestigungslasche (17), aufweist, der bzw. die zur Befestigung des Befestigungsrings (12) am Gasgenerator (11), insbesondere an einem Flansch (16) des Gasgenerators (11), plastisch verformbar ist und/oder, dass die Verstärkungseinlage (15) und/oder das Verstärkungsteil (25) eine Rasteinrichtung, insbesondere einen Clip (18) zur rastenden Befestigung des Befestigungsrings am Gasgenerator (11), insbesondere an einem Flansch (16) des Gasgenerators, aufweist.

5. Vorrichtung (10) nach einem der vorangehenden Ansprüche, **dadurch gekennzeichnet, dass** der Befestigungsring (12) lösbar, vorzugsweise über eine Schraubverbindung (23), oder unlösbar, vorzugsweise über eine Nietverbindung, an dem Gasgenerator (11), insbesondere an einem Flansch (16) des Gasgenerators (11), befestigt werden kann, und/oder, dass eine zusätzliche Ringscheibe vorgesehen ist, die auf einem Flansch des Gasgenerators aufgelegt werden kann.

6. Vorrichtung (10) nach einem der vorangehenden Ansprüche, **dadurch gekennzeichnet, dass** das Verstärkungsteil (25) zumindest teilweise durch einen offenen Ring gebildet wird, der vorzugsweise mindestens einen Haltevorsprung aufweist, der zur Fixierung des Befestigungsrings an den Gasgenerator (11), insbesondere an einen Flansch (16) des Gasgenerators (11), gelegt werden kann, wobei Enden des offenen Rings nach einer Anordnung des Rings an dem Gasgenerator (11) vorzugsweise schließbar sind, insbesondere durch eine stoffschlüssige und/oder kraftschlüssige und/oder formschlüssige Verbindung, beispielsweise durch eine Rastverbindung und/oder eine Verklebung und/oder eine Verschweißung und/oder eine Schraubverbindung und/oder eine Nietverbindung, wobei Verbindungselemente integraler Bestandteil des Ringes sein können oder als separate Elemente bereitgestellt sein können, und/oder, dass der offene Verstärkungsring durch den elastischen Abschnitt (14) zusammengehalten wird, wobei, vorzugsweise, der elastische Abschnitt durch eine Rückstellkraft des offenen Verstärkungsrings gespannt ist, insbesondere derart, dass eine Haftreibungskraft zwischen offenem Verstärkungsring und elastischem Abschnitt erhöht ist.

7. Vorrichtung (10) nach zumindest einem der vorangehenden Ansprüche, **dadurch gekennzeichnet, dass** die Verstärkungseinlage (15) und/oder das Verstärkungsteil (25) aus einem Material gebildet sind, das einen E-Modul von mindestens 5 GPa, vorzugsweise mindestens 10 GPa, weiter vorzugsweise mindestens 100 GPa aufweist, und/oder, dass der elastische Abschnitt aus einem Elastomer, insbesondere einem Gummimaterial oder Silikon, gebildet ist, und/oder, dass ein E-Modulwert eines Materials des elastischen Abschnitts (14) unter 1 GPa, vorzugsweise unter 0,5 GPa, weiter vorzugsweise unter 0,1 GPa liegt.

8. Vorrichtung (10) nach einem der vorangehenden Ansprüche, **gekennzeichnet durch** mindestens ein axial verlaufendes Dämpfungsglied (13), insbesondere mehrere Tilgerfüße, und/oder **dadurch**, dass der Befestigungsring einen radial verlaufenden Ringspalt aufweist.

9. Airbagmodul mit einem Gasgenerator (11), insbesondere umfassend einen Flansch (16), sowie mit einer Vorrichtung (10) zur schwingfähigen Befestigung eines Gasgenerators (11) als Schwingungsdämpfermasse innerhalb des Airbagmoduls nach einem der vorangehenden Ansprüche, sowie mit einem Gassack und/oder mit einem Diffusor und/oder mit einem Modulträger.

10. Airbagmodul nach Anspruch 9, **dadurch gekennzeichnet, dass** der elastische Abschnitt (14) und/oder die Verstärkungseinlage (15) und/oder das Verstärkungsteil (25) in unmittelbaren Kontakt mit dem Gasgengerator (11), insbesondere dem Flansch (16) des Gasgenerators (11) stehen, und/oder, dass der Flansch des Gasgenerators ringförmig um eine Außenwandung des Gasgenerators umläuft und/oder integral mit der Außenwandung des Gasgenerators ausgebildet ist, und/oder, dass der elastische Abschnitt zwischen Verstärkungsteil (25) und Gasgenerator (11), insbesondere dem Flansch (16) des Gasgenerators (11) angeordnet ist, und/oder, dass die Verstärkungseinlage (15) zwischen elastischem Abschnitt (14) und Gasgenerator (11), insbesondere dem Flansch (16) des Gasgenerators, angeordnet ist.

11. Airbagmodul nach einem der Ansprüche 9 oder 10, **dadurch gekennzeichnet, dass** der Befestigungsring (12) und der Gasgenerator (11), insbesondere der Befestigungsring und der Flansch (16) des Gasgenerators (11), stoff- und/oder kraft- und/oder formschlüssig, beispielsweise über ein Crimp- und/oder Schraub- und/oder Niet- und/oder Rast- und/oder Schnappverbindung aneinander befestigt sind.

12. Fahrzeuginnsassen-Sicherungssystem, umfassend ein Airbagmodul nach einem der Ansprüche 9 bis 11 sowie ein Airbagmodul-Aufnahmegehäuse, insbesondere ein Lenkrad-Gehäuse.

13. Verfahren zur Herstellung einer Vorrichtung (10) zur schwingfähigen Befestigung eines Gasgenerators (11) als Schwingungsdämpfermasse innerhalb eines Airbagmoduls nach einem der Ansprüche 1 bis 8,
wobei die Vorrichtung (10) einen Befestigungsring (12) zur Befestigung des Gasgenerators (11) aufweist, der mindestens einen elastischen Abschnitt (14) und eine Verstärkungseinlage (15) zur Verstärkung des Befestigungsrings (12) und Fixierung des Befestigungsrings am Gasgenerator (11) aufweist,
wobei die Verstärkungseinlage (15) durch einen offenen Verstärkungsring gebildet wird,
wobei der elastische Abschnitt (14) durch einen geschlossenen Ring gebildet wird, in dem die Verstärkungseinlage (15) aufgenommen ist, und
wobei der elastische Abschnitt (14) derart auf die Verstärkungseinlage (15) aufgebracht wird, dass diese durch eine Spannkraft des elastischen Abschnitts (14) zusammengehalten wird.

14. Verfahren nach Anspruch 13, **gekennzeichnet durch** die Schritte:
- Beschichten, insbesondere Umspritzen, der Verstärkungseinlage (15) mit Kunststoff und
- Aufbringen des elastischen Abschnittes auf den Kunststoff.

15. Verfahren zur Herstellung eines Airbagmoduls nach einem der Ansprüche 9 bis 11, mit einem Gasgenerator (11) und einer Vorrichtung (10) nach einem der Ansprüche 1 bis 8, wobei die Vorrichtung (10) gemäß einem Verfahren nach Anspruch 13 oder 14 hergestellt wird und wobei das Verfahren zur Herstellung des Airbagmoduls ferner die folgenden Schritte umfasst:
a) Anordnen des elastischen Abschnitts (14) an dem Gasgenerator (11), insbesondere einem Flansch (16) des Gasgenerators (11),
b) Zusammenfügen des Verstärkungsteils (25) mit dem elastischen Abschnitt (14) und dem Gasgenerator (11), und
c) Befestigen des Verstärkungsteils (25) am Gasgenerator (11), insbesondere dem Flansch (16) des Gasgenerators (11).

## Claims

1. A device (10) for fastening a gas generator (11) in an oscillatory manner as a vibration damper mass within an airbag module,
wherein a fastening ring (12) is provided for fastening the gas generator (11), which fastening ring (12) has at least one elastic section (14) and at least one reinforcement insert (15) for reinforcing the fastening ring (12) and fixing the fastening ring (12) to the gas generator (11),
wherein the reinforcement insert (15) is formed by a reinforcing ring (15) open in the circumferential direction of the ring, and
wherein the elastic section (14) is formed by a closed ring (26) in which the reinforcement insert (15) is received.

2. The device (10) according to claim 1, **characterized in that** a surface of the reinforcement insert (15) is made at least in part from plastic.

3. The device (10) according to claim 1 or 2, **characterized in that** the fastening ring (12) has at least one elastic section (14) and one reinforcement insert (15) for reinforcing the fastening ring (12) and fixing the fastening ring (12) to the gas generator (11), wherein the reinforcing member (25) at least in portions encompasses the elastic section (14) such that the elastic section (14) can be fixed to the gas generator (11).

4. The device (10) according to any one of the preceding claims, **characterized in that** the reinforcement insert (15) and/or the reinforcing member (25) have/has a metal core which is coated, especially insert-molded, at least in portions with plastic, and/or in that the reinforcement insert and/or the reinforcing member (25) are/is made at least in part from metal and/or from plastic, especially from fiber-reinforced plastic, and/or in that the reinforcement insert (15) and/or the reinforcing member (25) include(s) at least one fastening portion, especially a fastening lug (17), which is plastically deformable for fixing the fastening ring (12) to the gas generator (11), especially to a flange (16) of the gas generator (11), and/or **in that** the reinforcement insert (15) and/or the reinforcing member (25) include(s) a detent means, especially a clip (18) for engaging the fastening ring on the gas generator (11), especially on a flange (16) of the gas generator.

5. The device (10) according to any one of the preceding claims, **characterized in that** the fastening ring (12) can be fastened detachably, preferably via a screwed connection (23), or permanently, preferably via a riveted connection, to the gas generator (11), especially to a flange (16) of the gas generator (11), and/or **in that** an additional ring disk is provided which can be placed onto a flange of the gas generator.

6. The device (10) according to any one of the preceding claims, **characterized in that** the reinforcing member (25) is formed at least in part by an open ring which preferably has at least one retaining projection adapted to be placed on the gas generator (11), especially on a flange (16) of the gas generator (11), for fixing the fastening ring, wherein, after arranging the ring on the gas generator (11), ends of the open ring preferably can be closed especially by an adhesive and/or non-positive and/or positive connection, for example by a detent connection and/or a bonded connection and/or a welded connection and/or a screwed connection and/or a riveted connection, wherein connecting elements may be an integral part of the ring or may be provided as separate elements, and/or **in that** the open reinforcing ring is held together by the elastic section (14), wherein preferably the elastic section is tensioned by a resetting force of the open reinforcing ring, especially such that a static friction force between the open reinforcing ring and the elastic section is increased.

7. The device (10) according to at least one of the preceding claims, **characterized in that** the reinforcement insert (15) and/or the reinforcing member (25) are/is formed of a material which has an E-modulus of at least 5 GPa, preferably of at least 10 GPa, further preferred of at least 100 GPa, and/or **in that** the elastic section is made from an elastomer, especially a rubber material or silicone, and/or **in that** an E-modulus of a material of the elastic section (14) is less than 1 GPa, preferably less than 0.5 GPa, further preferred less than 0.1 GPa.

8. The device (10) according to any one of the preceding claims, **characterized by** at least one axially extending damping member (13), especially plural absorbing feet, and/or in that the fastening ring has a radially extending annular gap.

9. An airbag module comprising a gas generator (11), especially including a flange (16), as well as comprising a device (10) for fixing a gas generator (11) in an oscillatory manner as a vibration damping mass within the airbag module according to any one of the preceding claims, as well as comprising an airbag and/or comprising a diffusor and/or comprising a module support.

10. The airbag module according to claim 9, **characterized in that** the elastic section (14) and/or the reinforcement insert (15) and/or the reinforcing member (25) is/are in direct contact with the gas generator (11), especially with the flange (16) of the gas generator (11), and/or **in that** the flange of the gas generator is annularly circumferential about an outer wall of the gas generator and/or is formed integrally with the outer wall of the gas generator, and/or **in that** the elastic section is arranged between the reinforcing member (25) and the gas generator (11), especially the flange (16) of the gas generator (11), and/or **in that** the reinforcement insert (15) is arranged between the elastic section (14) and the gas generator (11), especially the flange (16) of the gas generator.

11. The airbag module according to any one of the claims 9 or 10, **characterized in that** the fastening ring (12) and the gas generator (11), especially the fastening ring and the flange (16) of the gas generator (11), are adhesively and/or non-positively and/or positively fastened to each other, for example by a crimped and/or screwed and/or riveted and/or detent and/or snap connection.

12. A vehicle occupant safety system comprising an airbag module according to any one of the claims 9 to 11 as well as a housing receiving an airbag module, especially a steering wheel housing.

13. A method of manufacturing a device (10) for fixing a gas generator (11) in an oscillatory manner as a vibration damping mass within an airbag module according to any one of the claims 1 to 8,
wherein the device (10) includes a fastening ring (12) for fixing the gas generator (11), which fastening ring has at least one elastic section (14) and one reinforcement insert (15) for reinforcing the fastening ring (12) and fixing the fastening ring to the gas generator (11),
wherein the reinforcement insert (15) is formed by an open reinforcing ring,
wherein the elastic section (14) is formed by a closed ring in which the reinforcement insert (15) is received, and
wherein the elastic section (14) is applied to the reinforcement insert (15) so that the latter is held together by elasticity of the elastic section (14).

14. The method according to claim 13, **characterized by** the steps of:
- coating, especially insert-molding, the reinforcement insert (15) with plastic and
- applying the elastic section to the plastic material.

15. The method of manufacturing an airbag module according to any one of the claims 9 to 11, comprising a gas generator (11) and a device (10) according to any one of the claims 1 to 8, the device (10) being manufactured in accordance with a method according to claim 13 or 14 and the method of manufacturing the airbag module further comprising the following steps of:
a) arranging the elastic section (14) on the gas generator (11), especially on a flange (16) of the gas generator (11),
b) joining the reinforcing member (25) with the elastic section (14) and the gas generator (11), and
c) fastening the reinforcing member (25) to the gas generator (11), especially to the flange (16) of the gas generator (11).

## Revendications

1. Dispositif (10) de fixation oscillante d'un générateur de gaz (11) en tant que masse amortisseur de vibrations à l'intérieur d'un module d'airbag,
pour lequel une bague de fixation (12) est prévue pour fixer le générateur de gaz (11), laquelle présente au moins une partie élastique (14) ainsi qu'un insert de renfort (15) pour renforcer la bague de fixation (12) et pour fixer la bague de fixation (12) sur le générateur de gaz (11),
pour lequel l'insert de renfort (15) est formé par une bague de renfort (15) qui est ouverte dans la direction circonférentielle de la bague et
pour lequel la partie élastique (14) est formée par une bague fermée (26) dans laquelle l'insert de renfort (15) est reçu.

2. Dispositif (10) selon la revendication 1, **caractérisé en ce qu'**une surface de l'insert de renfort (15) est au moins partiellement en matière plastique.

3. Dispositif (10) selon la revendication 1 ou 2, **caractérisé en ce que** la bague de fixation (12) présente au moins une partie élastique (14) et une pièce de renfort (25) pour renforcer la bague de fixation (12) et pour fixer la bague de fixation (12) sur le générateur de gaz (11), pour lequel la pièce de renfort (25) englobe au moins en partie la partie élastique (14) de telle sorte que la partie élastique (14) peut être fixée au générateur de gaz (11).

4. Dispositif (10) selon l'une des revendications précédentes, **caractérisé en ce que** l'insert de renfort (15) et / ou la pièce de renfort (25) possède un noyau métallique, au moins dans en partie couvert avec du plastique, notamment surmoulé, et/ou que l'insert de renfort et/ou la pièce de renfort (25) est réalisé au moins partiellement en métal et/ou en matière plastique, notamment en plastique renforcé de fibres, et/ou que l'insert de renfort (15) et/ou que la pièce de renfort (25) présente au moins une section de fixation, en particulier une patte de fixation (17), laquelle section ou laquelle patte est plastiquement déformable pour fixer la bague de fixation (12) sur le générateur de gaz (1 1), en particulier sur un flasque (16) du générateur de gaz (11) et/ou que l'insert de renfort (15) et/ou la pièce de renfort (25) présente un dispositif d'encliquetage, en particulier un clip (18) pour l'accrochage de la bague de fixation sur le générateur de gaz (11), en particulier à un flasque (16) du générateur de gaz.

5. Dispositif (10) selon l'une des revendications précédentes, **caractérisé en ce que** la bague de fixation (12) peut être fixée amovible, de préférence via un raccord vissé (23), ou non amovible, de préférence via une liaison rivetée, sur le générateur de gaz (11), en particulier à un flasque (16) du générateur de gaz (11), et/ou qu'une rondelle supplémentaire est prévue qui peut être placée sur un flasque du générateur de gaz.

6. Dispositif (10) selon l'une des revendications précédentes, **caractérisé en ce que** la pièce de renfort (25) est au moins partiellement formée par une bague ouverte, qui présente de préférence au moins une protrusion d'arrêt, laquelle peut être placée pour fixer la bague de fixation sur le générateur de gaz (11), notamment sur un flasque (16) du générateur de gaz (11),
pour lequel les extrémités de la bague ouverte peuvent de préférence être fermées après que la bague a été disposée sur le générateur de gaz (11), notamment au moyen d'une connexion par matériau et/ou par effort et/ou de forme, par exemple au moyen d'une connexion par encliquetage et/ou d'une liaison par collage et/ou d'une liaison par soudage et/ou d'une connexion par vissage et/ou d'une connexion par rivetage,
pour lequel les éléments de liaison peuvent faire partie intégrante de l'anneau ou peuvent être fournis en tant qu'éléments séparés, et/ou **en ce que** l'anneau de renfort ouvert est maintenu ensemble par la partie élastique (14), pour lequel, de préférence, la partie élastique est tendue par une force de rappel de l'anneau de renfort ouvert, notamment de manière à augmenter la force de frottement statique entre la bague de renfort ouverte et la partie élastique.

7. Dispositif (10) selon au moins l'une des revendications précédentes, **caractérisé en ce que** l'insert de renfort (15) et/ou la pièce de renfort (25) est formé d'un matériau qui a un module d'élasticité E d'au moins 5 GPa, de préférence au moins 10 GPa, plus préférablement au moins 100 GPa, et/ou que la partie élastique est formée à partir d'un élastomère, en particulier un matériau caoutchouteux ou silicone, et/ou qu'une valeur de module d'élasticité E d'un matériau de la partie élastique (14) est inférieure à 1 GPa, de préférence inférieure à 0,5 GPa, plus préférablement inférieure à 0,1 GPa.

8. Dispositif (10) selon l'une des revendications précédentes, **caractérisé par** au moins un organe amortisseur (13) s'étendant axialement, en particulier une pluralité de pieds amortisseurs, et/ou **caractérisé en ce que** la bague de fixation comporte un espace annulaire s'étendant radialement.

9. Module airbag avec un générateur de gaz (11), comprenant notamment un flasque (16), ainsi qu'un dispositif (10) pour la fixation oscillante d'un générateur de gaz (11) comme masse amortisseur de vibrations à l'intérieur du module d'airbag selon l'une des revendications précédentes, et avec un coussin gonflable et/ou avec un diffuseur et/ou avec un support de module.

10. Module airbag selon la revendication 9, **caractérisé en ce que** la partie élastique (14) et/ou l'insert de renfort (15) et/ou la pièce de renfort (25) sont en contact direct avec le générateur de gaz (11), en particulier le flasque (16) du générateur de gaz (11), et/ou que le flasque du générateur de gaz s'étend en anneau autour d'une paroi externe du générateur de gaz et/ou est formée d'un seul tenant avec la paroi externe du générateur de gaz, et/ou que la partie élastique est disposée entre la pièce de renfort (25) et le générateur de gaz (11), en particulier le flasque (16) du générateur de gaz (11), et/ou que l'insert de renfort (15) est disposé entre la partie élastique (14) et le générateur de gaz (11), en particulier le flasque (16) du générateur de gaz.

11. Module airbag selon l'une des revendications 9 ou 10, **caractérisé en ce que** la bague de fixation (12) et le générateur de gaz (11), en particulier la bague de fixation et le flasque (16) du générateur de gaz (11), sont reliés l'un à l'autre par une connexion par matériau et/ou par effort et/ou de forme, par exemple au moyen d'une liaison par sertissage et/ou par vissage et/ou par rivetage et/ou par clipsage et/ou par encliquetage.

12. Système de sécurité des occupants de véhicule, comprenant un module airbag selon l'une des revendications 9 à 11 et un boîtier de réception de module airbag, notamment un boîtier de volant.

13. Procédé de réalisation d'un dispositif (10) de fixation oscillante d'un générateur de gaz (11) en tant que masse amortisseur de vibrations à l'intérieur d'un module airbag selon l'une des revendications 1 à 8,
pour lequel Le dispositif (10) comprend une bague de fixation (12) pour la fixation du générateur de gaz (11), laquelle comporte au moins une partie élastique (14) et un insert de renfort (15) pour renforcer la bague de fixation (12) et pour fixer la bague de fixation sur le générateur de gaz (11),
pour lequel l'insert de renfort (15) est formé par une bague de renforcement ouverte,
pour lequel la partie élastique (14) est formée par une bague fermée dans laquelle l'insert de renfort (15) est logé, et
pour lequel la partie élastique (14) est ainsi placée sur l'insert de renfort (15) que ceux-ci sont maintenus ensemble par une force de tension de la partie élastique (14).

14. Procédé selon la revendication 13, **caractérisé par** les étapes:
- Revêtement, en particulier revêtement par injection, de l'insert de renfort (15) de plastique et
- Application de la partie élastique sur le plastique.

15. Procédé de réalisation d'un module airbag selon l'une des revendications 9 à 11, avec un générateur de gaz (11) et un dispositif (10) selon l'une des revendications 1 à 8, pour lequel le dispositif (10) est réalisé selon un procédé selon la revendication 13 ou 14 et pour lequel la méthode de production du module airbag comprend en outre les étapes suivantes :
a) disposer la partie élastique (14) sur le générateur de gaz (11), en particulier un flasque (16) du générateur de gaz (11),
b) assembler la partie de renfort (25) avec la partie élastique (14) et le générateur de gaz (11), et
c) fixer la pièce de renfort (25) au générateur de gaz (11), en particulier le flasque (16) du générateur de gaz (11).
